# EUROPEAN PATENT APPLICATION

(11) **EP 1 184 865 A2**
(43) Date of publication of application: **06.03.2002**
(21) Application number: 01300466.8
(22) Date of filing: 19.01.2001
(51) Int. Cl.: G11B 27/10, G11B 27/28, G11B 27/34, H04N 5/445, H04N 5/775, H04N 5/76

(54) **Video/audio information retrieving apparatus and method**

(30) Priority: 07.08.2000 JP 2000244010
(71) Applicant: Hitachi, Ltd., Chiyoda-ku, Tokyo 101-8010 (JP)
(72) Inventor: Koreeda, Hiroyuki, c/o Hitachi, Ltd., Intellectual, 1-chome, Chiyoda-ku, Tokyo 100-8220 (JP); Nanki, Masaru, c/o Hitachi, Ltd., Intellectual, 1-chome, Chiyoda-ku, Tokyo 100-8220 (JP); Sato, Tomotake, c/o Hitachi, Ltd., Intellectual, 1-chome, Chiyoda-ku, Tokyo 100-8220 (JP); Akiyama, Moriyoshi, c/o Hitachi Ltd., Intellectual, 1-chome, Chiyoda-ku, Tokyo 100-8220 (JP); Kamogawa, Koji, c/o Hitachi, Ltd., Intellectual, 1-chome, Chiyoda-ku, Tokyo 100-8220 (JP)
(74) Representative: Hackney, Nigel John

(57) **Abstract**

Information described in the electric program guide of broadcast has been diversified in the format and contents of transmission in every broadcast media and therefore it has been required to individually read and retrieve the electric program guide application for reading such contents. Similarly, even in the disc recorder and tape recorder for the video/audio information pieces, there is a function for individual management of index of each medium but it has been impossible to integrally read and retrieve such indices.

A problem of the present invention is to integrally read, retrieve and reproduce such video and audio information pieces with a digital broadcast receiver.

In view of solving the problem explained above, the video/audio information retrieving apparatus of the present invention can be realized by providing a means for generating an electric program guide information of broadcast media and index information of storage media as the integrated index, a mans for generating the multimedia code of the index information and multimedia information including the processing program for such index information, then multiplexing such information to a digital signal and then outputting such multiplexed signal and a means for retrieving and reproducing the video/audio information by executing the multimedia information in the digital broadcast receiver for receiving such multiplexed output.

## Description

The present invention relates to a video/audio information retrieving apparatus and method that can provide a user-friendly video/audio information management and retrieval means by retrieving through the media the video/audio information transmitted or reproduced through various media and then recording and reproducing the selected video/audio information.

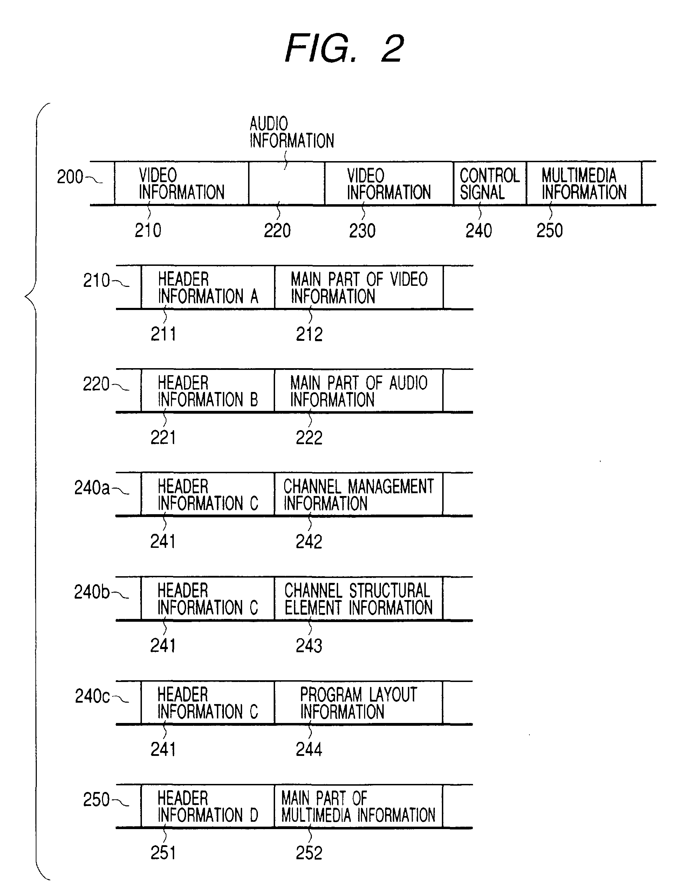

In the digital broadcast, as illustrated in Fig. 2, various control signals 240 and multimedia data are transmitted in the form being multiplexed to the broadcast video information 210 and audio information 220.

A video information 210 is constituted of a header information A211 and a video information itself 212 and the header information A211 holds the packet ID for uniquely identifying individual video information pieces, the video ID for uniquely identifying such individual video information pieces as a continuous video group and the information about the format of video information and control method.

An audio information 220 is constituted of a header information B221 and a main part of the audio information 222 and the header information A221 holds the packet ID for uniquely identifying individual audio information pieces, the audio ID for uniquely identifying such individual audio information pieces as a continuous audio group and the information about the format of audio information.

The control signal 240 is constituted of a header C241 and main parts of various control signals and the header information C241 holds the packet ID for uniquely identifying the header information and the information suggesting a kind of control signal. The control signal includes a channel management information 242, a channel format information 243 and a program layout information 244 or the like.

The channel management information 242 is used for management of the channel information that is transmitted in the broadcast in order to hold the channel number and the packet ID of the channel format information 243 corresponding to such channel. The channel format information 243 holds, for each channel, the video information 210 of the broadcast in such a channel, the video ID for designating the audio information 220 and the information such as audio ID and multimedia data ID or the like.

The program layout information 244 holds, for each program of each channel during a certain constant period, a channel number, the information as the source for displaying an electric program guide such as a program title, a program ID for uniquely identifying the program, a broadcast start time, a duration, a program genre information and detail explanation of program and moreover holds, for each program, also a program attribute information such as a parental rate information, an information limiting the copying to a videotape recorder or the charging information the case where a program is offered with charge in unit of program.

The multimedia information 250 is constituted of a header information D251 and the main part of multimedia information 252 and the header information D251 holds the ID for uniquely identifying the multimedia information and the information suggesting a type of the multimedia information, while the main part of multimedia information 252 holds an screen information constituted of audio, still picture, animation and characters and a execution program for the operation of this screen information.

A digital broadcast receiver for receiving the digital broadcast as explained above decodes the video information 210 and audio information 220 to reproduce the program and also displays an electric program guide based on the control signal 240 to select a program and to perform the reserved program recording. This digital broadcast receiver also has a function to reproduce the multimedia contents based on the multimedia data 250 not depending on the microprocessor.

As the standards of this multimedia data 250, there are layout such as BML (Broadcast Markup Language), HTML (Hyper Text Markup Language), data description language and program processing language such as ECMAScript, Java. These standards can be used selectively depending on various application fields .

Even in the analog broadcast, the broadcast service to realize the electric program guide and multimedia application is offered, in the same manner, by transmitting the program layout information and multimedia data to the non-display region of the video signal and then receiving this information with a television receiver.

Meanwhile, a videotape recorder has a function to display a list of video/audio data recorded within the tape media and then select the desired data to realize the queuing and reproduction of the selected video/audio data.
(1) This function is realized with the following method. The ID that can be uniquely identified is recorded to the tape media.
(2) Program information such as start time, channel number and recording position in the tape is recorded to a recorder when the video/audio data is recorded to the tape media with a videotape recorder.
(3) The ID recorded in the item (1) is read when the tape media are set to the recorder.
(4) When an instruction is issued from a user, the list of program information recorded in the tape corresponding to the ID read out is displayed.

When a user selects the program from the list, the tape is queued depending on the recording position of program on the tape and thereby the video/audio data can be reproduced.

A product mounting a tape navigation function is already available in the market. In the case of this product, such tape navigation system provides the simplified retrieving function through management of video and audio index recorded on the tape under the condition that the self recording/reproducing can be realized within the videotape recorder.

In the first related art, since the this program layout information transmission service is performed individually for each broadcast medium, the data format of program layout information and transmission system are also depending on each medium and moreover the program layout information to be transmitted is limited only to the information within such broadcast media, users have been requested, at the time of finding out the program to watch, to retrieve the program by manipulating the program guide function of each medium such as terrestrial analog broadcasting, terrestrial digital broadcasting, broadcast satellite digital broadcasting and communication satellite digital broadcasting or the like.

Moreover, in the second related art, there is a limitation that the contents cannot be read even when the tape on which the programs are recorded with the other videotape recorder is set to the recorder mounting the tape navigation function and also there is a problem that only the channel number in the recording and broadcast time can be displayed as the indices and it becomes more difficult to discriminate the recorded contents as the number of recording tapes increases.

In addition, these electric program guide function and tape navigation function are mounted on individual devices such as television receiver and videotape recorder or the like. Therefore, it is very troublesome for user to select first in the television side the device to watch connected to the television receiver and then to drive the applications of the respective devices using different remote-controllers.

### SUMMARY OF THE INVENTION

The present invention has been proposed considering the background explained above and preferably it is an object of the present invention to provide a means to easily search and reproduce the video/audio data crossing the multimedia only with the manipulation in the television side based on the user's instructions.

In one aspect, a video/audio information searching apparatus of the present invention comprises a storage means for storing multimedia information pieces including the video/audio information inputted from each medium, information indicating the attributes such as title, channel, broadcast time, genre information of the video/audio information and the searching process program for searching such video/audio information, a setting means for setting the index information based on the attribute information stored with the storage means , a converting means for converting the index information set with the setting means and the searching process program to the multimedia information format and an output means for outputting the index information and searching process program converted with the converting means to the external circuits together with the video/audio information.

As explained above, the present invention can integrally search the video/audio information pieces of various broadcast media and recording media with user's manipulation in the digital broadcast receiver and thereby easily reproduce the wanted video/audio data.

### BRIEF DESCRIPTION OF THE DRAWINGS

These and other features, objects and advantages of the present invention will become more apparent from the following description when taken in conjunction with the accompanying drawings wherein:
Fig. 1 is a diagram illustrating a hardware structure of a video/audio information retrieving apparatus and a format of the index information of the video/audio information as an embodiment of the present invention;
Fig. 2 is a diagram illustrating a packet format of the video information, audio information, control signal and multimedia information, and an example of the multiplexing of these information pieces;
Fig. 3 is a diagram illustrating a hardware structure of a digital broadcast receiver;
Fig. 4 is a diagram illustrating a software structure of a digital broadcast receiver to execute the multimedia information;
Fig. 5 is a diagram illustrating a connection example of the video/audio information retrieving apparatus and the other video/audio devices as an embodiment of the present invention;
Fig. 6 is a diagram illustrating a display example of the search display image as an embodiment of the present invention;
Fig. 7 is a diagram illustrating the flow of multimedia information generation and transmission process to realize the video/audio information retrieval as an embodiment of the present invention;
Fig. 8 is a diagram illustrating a hardware structure of the video/audio information retrieving apparatus mounting an analog tuner as the other embodiment of the present invention;
Fig. 9 is a diagram illustrating a hardware structure of a digital tape recorder as an embodiment of the present invention; and
Fig. 10 is a diagram illustrating a hardware structure of a digital disc recorder as an embodiment of the present invention.

### DETAILED DESCRIPTION OF THE PREFERRED EMBODIMENTS

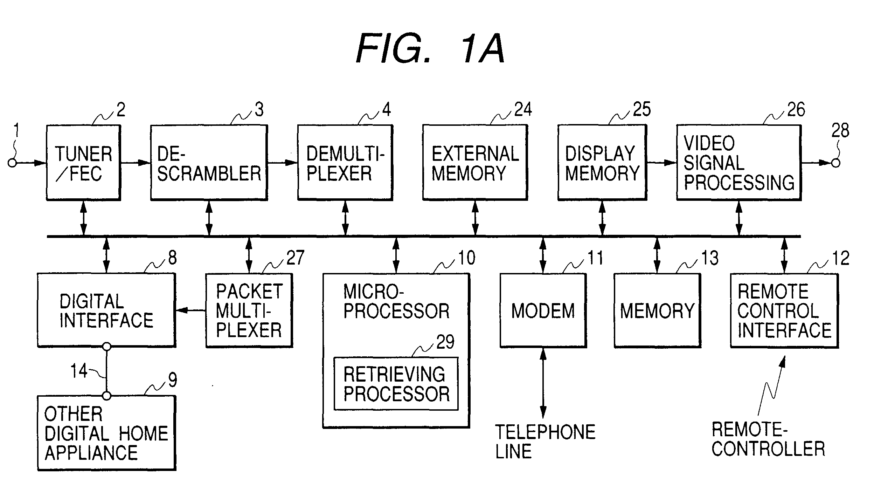

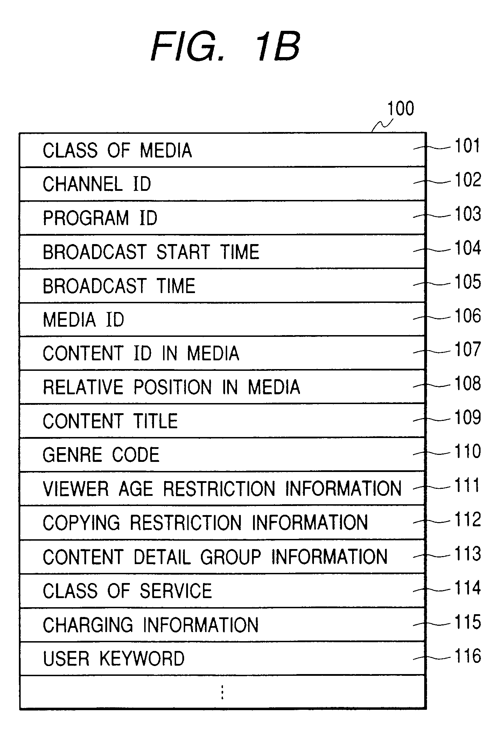

An embodiment of the present invention is illustrated in Fig. 1. Fig. 1A illustrates a structure of a video/audio information retrieving apparatus.

In Fig. 1, numeral 10 designates a microprocessor for arithmetic operations to perform various kinds of arithmetic operations based on the programs and data stored in a memory 13. Numeral 29, a search process unit to realize the search process for the video/audio information pieces as an example of such arithmetic operations.

Numeral 24 designates a large capacity non-volatile external memory for storing video and audio data and various management data. Numeral 12, a remote control interface unit for receiving a remote control operation signal from a user and notifies such signals to the microprocessor 10; 25, a display memory for generating the user's manipulation display image; 26, a video processing unit for outputting the manipulation display data generated in the display memory 25 from a video signal output terminal 28 as the video signal.

Numeral 1, a signal input terminal from which the packet-multiplexed and modulated signal of the video/audio/ control data guided from an antenna is inputted; 2, a tuner/FEC (Forward Error Correction) unit for receiving the digital television broadcast signal of the predetermined channel, demodulating this signal and executing the error correction of such demodulated signal; 3, a descramble unit for canceling the scramble of the scrambled signal for the limited receiving; 4, a demultiplexing unit for demultiplexing and outputting the predetermined video/audio/control signal from the packet-multiplexed signal. Various demultiplexed signals are transferred to the memory 13.

The video/audio information pieces demultiplexed on the memory 13 are then transferred to an external memory 24 with the microprocessor 10 and stored therein.

Numeral 11, a modem for transmitting and receiving through the telephone the charging information of the pay broadcast and the data for multimedia information by user operation line.

Moreover, 8, a digital interface for exchange of the video/audio information and various device control information pieces with the other digital home appliances 9 via the communication path 14. The video/audio signals from the other digital home appliances 9 are sequentially transferred to the memory 13 and moreover transferred and then recorded to the external memory 24 from the memory 13 with the microprocessor 10.

On the contrary, moreover, the video/audio information pieces recorded in the external memory 24 are then sequentially read to the memory 13 with the microprocessor 10 and can also be transferred to the other digital devices 9 via the digital interface 8 . In this case, it is possible to add various control signal 250 and multimedia data to the video/audio information pieces through the multiplexing.

This process can be realized by instructing the data to be added with the microprocessor 10 to the packet multiplexing unit 8 and then by multiplexing, with the packet multiplexing unit 8, the data to be added to the video/audio data to be outputted via the digital interface 8.

The program layout information among the control signals demultiplexed on the memory 13 is read with the microprocessor 10. Thereby, the electric program guide image is displayed on the display memory 25 and the processes for reading and searching the electric program guide can be executed based on the manipulation from the remote controller.

The program layout information is sequentially obtained and accumulated. When a user start up the electric program guide application with the remote control operation, the electric program guide application establishes again the program layout information group accumulated and then outputs the electric program guide to the video signal output terminal.

In case where the multimedia information is added to the selected channel, the multimedia information of this channel is obtained, and when a user calls the multimedia function with the remote control operation, the transmitted multimedia information is executed and the multimedia application incorporated with the program is executed. Here, it is not always required to transmit the multimedia information in such a manner as being added to the video/audio information and only the multimedia information is transmitted independently in a certain channel.

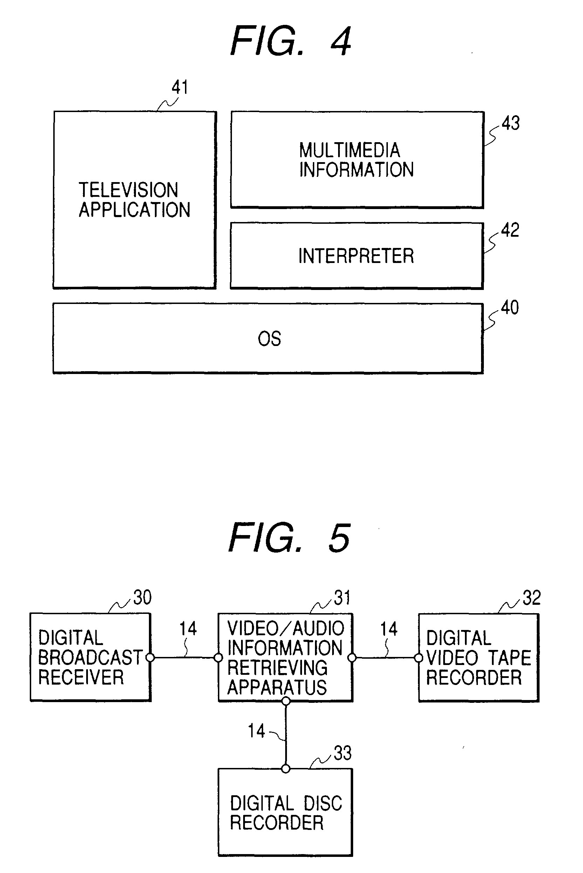

The multimedia information is executed on the software model of the digital broadcast receiver as illustrated in Fig. 4. On the OS (Operating System) 40, the television application 41 such as an electric program guide is executed. Moreover, an interpreter 42 for executing the multimedia contents by analyzing the multimedia information 43 transmitted with the broadcast is also provided.

The interpreter 42 executes the multimedia information 43 not depending on the specifications of the microprocessor 10 by interpreting it to the program of microprocessor 10. The microprocessor 10 can execute the single multimedia information 43 in the same manner even in different digital broadcast receivers by introducing such interpreter 42.

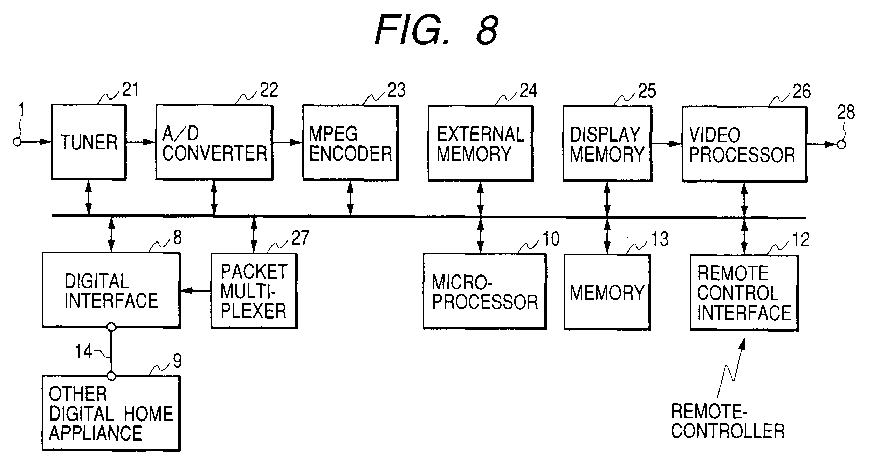

In Fig. 1, the hardware structure comprising the digital television broadcast receiver is illustrated, but it is also possible to consider the hardware structure comprising the analog broadcast receiver as illustrated in Fig. 8. In this case, the tuner unit 21, A/D converter unit 22 and MPEG encoder 23 illustrated in Fig. 8 are mounted in place of the tuner/FEC unit 2, descramble unit 3, demultiplexing unit 4 and modem 11 illustrated in Fig. 1A.

Numeral 21, a tuner unit for receiving the analog television broadcast of the predetermined channel and demodulating the broadcast signal to the video/audio signals; 22, a A/D converter unit for generating a digital color difference signal, a luminance signal of video signal and a digital audio signal; 23, an MPEG encoder for compressing the digital video/audio signal by encoding it based on the MPEG standards and then sequentially transferring to the memory 13. The compressed video/audio data is sequentially transferred to the external memory 24 from the memory 13 with the microprocessor 10 and is then recorded therein.

The program layout information multiplexed in the non-display region of the video signal can be read from the tuner 21 with the microprocessor 10. Thereby, the electric program guide image can be displayed on the display memory 25 and the electric program guide can then be read and searched based on the remote controller operation.

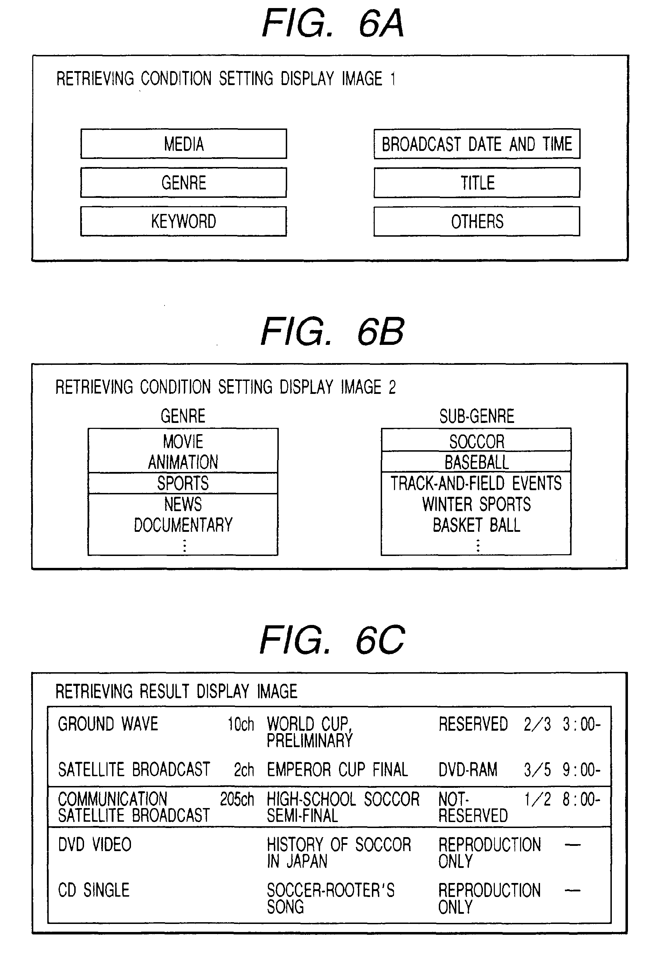

Fig. 5 illustrates an example of connection between the video/audio information retrieving apparatus 31 and the other devices via the digital communication path 14. In this embodiment, a digital broadcast receiver 30 comprising a CRT and speakers is connected with a digital videotape recorder 32 and digital disc recorder 33. Therefore, the video/audio information and other digital control information pieces can be mutually transmitted via the communication path 14 between these apparatuses.

The video/audio information recorded in the video/audio information retrieving apparatus 31, digital videotape recorder 32 and digital disc recorder 33 are then reproduced via the communication path and that received with the digital broadcast receiver 30 is reproduced in direct with the digital broadcast receiver 30. Thereby, a user can watch the programs.

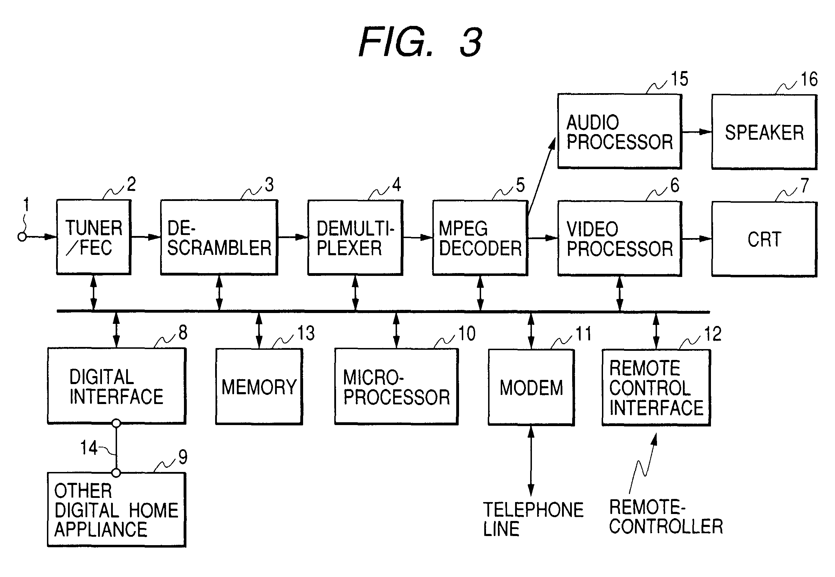

An example of the hardware structure of the digital broadcast receiver is illustrated in Fig. 3.

Like the video/audio information retrieving apparatus 31, the signal input terminal 1, tuner/FEC unit 2, descramble unit 3, demultiplexing unit 4, digital interface unit 8, packet multiplexing unit 27, memory 13, microprocessor 10, modem 11 and remote control interface unit 12 are also provided but difference is that the video/audio information demultiplexed with the demultiplexing unit 4 is then transmitted in direct to the MPEG decoder unit 5 and then decoded to the video/audio signals in the MPEG decoder unit 5.

Numeral 6, a video processing unit for converting the decoded video signal to an analog signal and then outputting this analog signal to the CRT 7; 15, an audio processing unit for converting the decoded audio signal to an analog signal and then outputting this analog signal to speakers 16.

The digital broadcast receiver 30 instructs, upon reception of the broadcast program, the demultiplexing unit 4 to obtain the channel management information 242 as one of the control signals 240 to recognize the channel structure. Thereby, channel selection with the remote controller manipulation becomes possible and when the channel selection is executed, the channel structure element information 243 of the designated channel can be obtained, the demultiplexing unit 4 is controlled to send the video/audio data corresponding to such channel to the MPEG decoder 5 and thereby the video/audio data of the designated channel can be reproduced. Moreover, the video/audio information recorded in the other digital home appliance 9 can be reproduced by inputting the video/audio information from the other digital home appliance 9 to the MPEG decoder 5 via the digital interface unit 8, in place of inputting the video/audio signal to the MPEG decoder 5 from the demultiplexing unit 4.

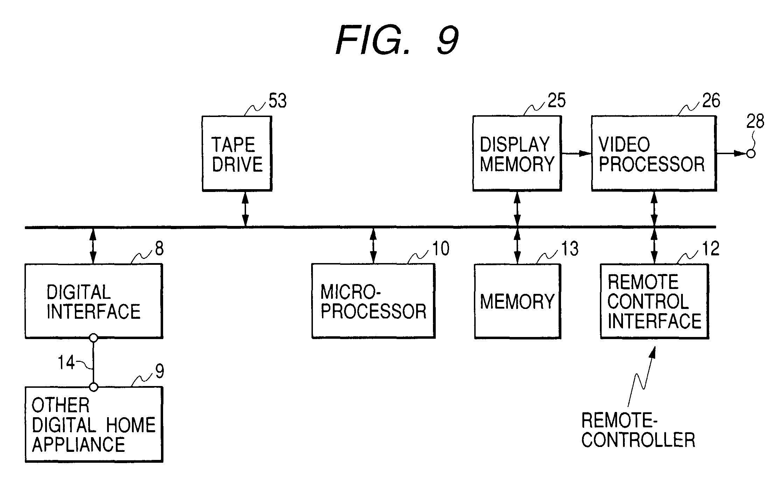

A hardware structure example of the digital tape recorder 32 is illustrated in Fig. 9. Like the video/audio information retrieving apparatus 31, the digital interface unit 8, memory 13, microprocessor 10, remote control interface unit 12, display memory 25, video processing unit 26 and video signal output terminal 28 are provided and moreover a tape drive 53 is also provided to execute the recording and reproducing of data to the storage medium by setting a portable type tape storage medium.

The video/audio information transferred from the other digital home appliance 9 via the digital interface unit 8 is then recorded in direct in the medium in the tape drive 53. Moreover, on the occasion of reproducing the video/audio information recorded in the storage medium, the video/audio information outputted from the tape drive 53 is outputted in direct to the other digital home appliance 9 via the digital interface unit 8.

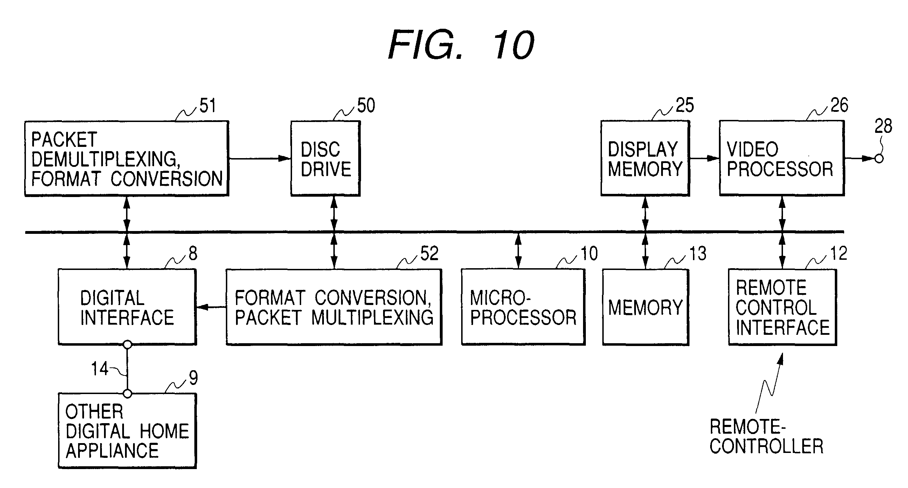

An example of the hardware structure of the digital disc recorder 33 is illustrated in Fig. 10. Like the video/audio information retrieving apparatus 31, the digital interface unit 8, memory 13, microprocessor 10, remote control interface unit 12, display memory 25, video processing unit 26 and video signal output terminal 28 are provided and a disc drive 50 is also provided to execute the recording and reproducing operation to a storage medium by setting the portable disc type storage medium.

The video/audio information transferred from the other digital home appliance 9 via the digital interface unit 8 is converted in the format suitable for the storage medium in the packet demultiplexing/format converting unit 51 and is then recorded on the storage medium in the disc drive 50. Moreover, on the occasion of reproducing the video/audio information recorded on the storage medium, the format is inversely converted to the initial video/audio information via the format conversion/packet multiplexing unit 52 and is then outputted to the other digital home appliance 9 via the digital interface unit 8.

The video/audio information is recorded to the external memory 24 of Fig. 1 and the index information 100 for management of location and various attributes of the video/audio information illustrated in Fig. 1B is also simultaneously stored in every video/audio information. In the index information, not only the video/audio information recorded in the video/audio information retrieving apparatus 31 but also the index information of the video/audio information recorded in the digital tape recorder 32 and digital disc recorder 33 and the program layout information 244 obtained with the digital broadcast receiver 30 are transmitted to via the digital interface unit 8 to the video/audio information retrieving apparatus 31 and is then stored therein in the form of integrated management.

The index information 100 is constituted of a class of medium 101, a channel ID 102, a program ID 103, a broadcast start time 104, a broadcast time 105, a medium ID 106, a content ID in the medium 107, a relative position in the medium 108, a content title 109, a genre code 110, a parental rate information 111, a copying restriction information 112, a content detail information 113, a type of service 114, a charging information 115 and a user keyword 116 or the like.

Next, the information to be set to the index information 100 depending on the video/audio medium will then be explained below.

A type of medium in which the video/audio information is broadcasted or recorded will be explained depending on the contents of the class of medium 101. In more practical, as the broadcasting, analog broadcasting, broadcast satellite digital broadcasting, communication satellite digital broadcasting, cable television digital broadcasting and Internet broadcasting or the like or the sub-genre of these broadcasts are considered. As the storage media, CD, video CD, DVD video, DVD audio that can be reproduced with the digital disc recorder 33, DVD-RAM that can be recorded and reproduced, digital VHS and digital video cassette as the digital videotape recorder 32, VHS as the analog videotape recorder and moreover hard disc or the sub-genre of these media can be considered.

Concretely, the channel ID 102 of each program, program ID 103, broadcast start time 104, broadcast time 105, genre record 110, viewer age restriction information 111, copying restriction information 112, content detail information 113 and charging information 115 are copied from the program layout information of the digital broadcast medium and the program time is set to the content title 109 and a kind of channel, namely television or multimedia service is set to the type of service 114.

Moreover, the channel number of each program is set to the channel ID 102 and the program title to the content title 109 from the program layout information of the analog broadcast medium and then the broadcast start time 104, broadcast time 105, genre code 110 and content detail information 113 are copied.

In the case of the storage medium, for example, DVD-RAM, the recorded local index information is transmitted to the video/audio retrieving apparatus 31 from the disc recorder 33 via the digital interface 14 at the time of program recording, the channel ID 102, program ID 103, broadcast start time 104, broadcast time 105, content title 109, genre code 110, viewer age restriction information 111, copying restriction information 112, content detail information 113 and type of service 114 are set from the recorded original broadcast program layout information, and moreover the ID for uniquely identifying the recorded DVD-RAM disc is set to the medium ID 106, the ID for uniquely identifying the video/audio information in the DVD-RAM is set to the content ID 107 in the medium and the storing position in the DVD-RAM is set to the relative position 108 in the medium.

In the case where the CD, DVD video, DVD audio are reproduced with the digital disc recorder 33, the index information of the disc being reproduced is sent to the video/audio information retrieving apparatus 31 via the digital interface 14 from the digital disc recorder 33, and the title of disc is copied to the content title 109 in the case of CD and the viewer age restriction information 111 and copying restriction information 112 stored in the disc are copied in the case of DVD. In the case of the CD, DVD and DVD audio disc, the music title information accommodated is set to the content detail information 113 and the ID for uniquely identifying CD and DVD is set to the medium ID 106.

In the case where the video/audio information is recorded with the digital tape recorder 32, the recorded local index information is transmitted to the video/audio information retrieving apparatus 31 via the digital interface 14, the channel ID 102, program ID 103, broadcast start time 104, broadcast time 105, content title 109, genre code 110, viewer age restriction information 111, copying restriction information 112, content detail information 113 and type of service 114 are set from the recorded initial program layout information, the ID for uniquely identifying the recorded tape is set to the medium ID 106, the ID for uniquely identifying the video/audio information in the tape is set to the content ID 107 in the medium and the storing position from the beginning of the tape is set to the relative position 108 in the medium.
Moreover, the user keyword 116 stores the keyword that a user can set freely using the soft keyboard with the remote controller.

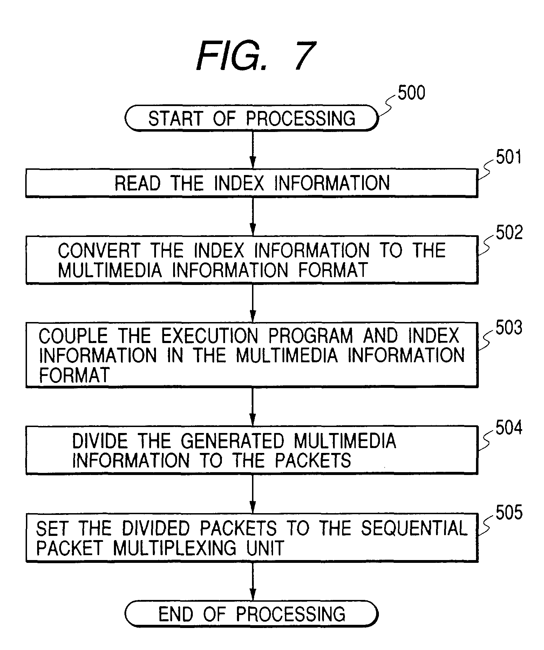

The video/audio information retrieving apparatus 31 reads (501), as indicated as 500 in the flow diagram of Fig. 7, the accumulated index information 100 from the external memory 24 and converts this index information to the multimedia information format conforming to the digital television standards(502). Next, such apparatus 31 also converts the converted index information 100 and the program for retrieving this information to the format of multimedia information 43 of Fig. 4, then couples (503) and divides the generated multimedia information to the packets (504).

Finally, the divided packets are read from the external memory by sequentially setting these packets to the packet multiplexing unit 27 of Fig. 1 (505), and thereby the multimedia information having the generated video/audio information retrieving function is multiplexed and then outputted as the multimedia information incorporated with the video/audio information outputted via the digital interface 14.

In this case, when the digital broadcast receiver 30 having receiving the output from the video/audio information retrieving apparatus 31 reproduces the video/audio information and instructs start of multimedia execution function with the remote control unit. Therefore, the video/audio information can be retrieved by interpreting and executing the multimedia information.

Moreover, the multimedia information having the video/audio information retrieving function is not required to be multiplexed as the multimedia information incorporated with the video/audio information. For example, it is also possible to introduce a method to output the information than can hold only the multimedia information as the structural element for the broadcast channel.

In this case, the digital broadcast receiver 30 which receives the output from the video/audio information retrieving apparatus 31 automatically interprets and executes the multimedia information because there is no video/audio information to realize the video/audio information retrieval.

In addition, the channel different from that having the video/audio information is provided and thereby to employ the embodiment introducing the structure to transmit only the multimedia information having the video/audio information retrieving function.

In this case, the digital broadcast receiver 30 having received the output of the video/audio information retrieving apparatus 31 reproduces the video/audio information. Here, when the channel to which the multimedia information having the video/audio information retrieving function is selected with the remote control unit of the digital broadcast receiver 30, the multimedia information is automatically interpreted and executed to realize the video/audio information retrieval.

In the multimedia information to execute the video/audio information retrieval, the index information 100 of these broadcast media can be retrieved under various conditions. Fig. 6 is an example of the display image in this retrieval.

Fig. 6A is an example of the display image that is displayed first when a user calls the retrieval function. Here, a type of medium, broadcast date and time, genre, title, keyword and the other retrieval conditions may be selected.

For example, when the genre is selected in the display image, the condition setting image 2 of Fig. 6B is displayed. Here, the genre and sub-genre displayed in the right side corresponding to the genre are selected. Thereby, the index information is retrieved depending on the genre and the result is then displayed in the retrieval result display image of Fig. 6C.

In this image, class of medium (media type) , channel number of broadcast, title, recording condition, and broadcast date in the case of broadcast and its recording are displayed from the left side.

In the column of recording condition, "Not-reserved" is displayed when the recording is not yet reserved, "Reserved" is displayed for the condition of waiting for the reserved recording, "Broadcasting" is displayed when a program is broadcasted, "Recording" is displayed for the condition of recording while the program is broadcasted, and "Reproduction only" is displayed, if name of the medium of the recording destination is the video/audio medium that is available in the market, for the condition where the broadcast program is already recorded.

Here, when the video/audio medium of "Not-reserved" condition is selected, this program is set for reservation of recording. When the video/audio medium of "Reserved" condition is selected, reservation can be canceled. When the video/audio medium of the "Recording" condition is selected, such channel is selected and the broadcast is reproduced. Moreover, when the video/audio medium of the "Recorded" and "Reproduction only" condition is selected, the video/audio medium is read from the corresponding medium and is then reproduced.

Moreover, as an example of the other retrieval, the desired movie can be searched from the media that is scheduled for broadcast or is already recorded or from the video/audio media that can be available in the market by designating the name of movie to watch and searching it based on the content title 109 after selecting the title.

In addition, it is also possible that the content detail information 113 and user keyword 116 are searched with the keyword of the names of the casts and director or search with the genre of sports or with the range of the broadcast date and time. Moreover, it is also possible to search with the combination of conditions.

As explained above, according to this embodiment, the desired video/audio information of user can easily be retrieved across the broadcast media and storage media with the remote control manipulation of the digital broadcast receiver.

In addition, it is now possible to utilize the video/audio information retrieving function with any type of digital broadcast receiver that is standardized in respective countries and available in the market by converting the format of the generated and transmitted multimedia information to the format suitable for the standards of each country.

For the format of the multimedia information supported with the digital broadcast receiver 30 connected, an embodiment for conversion and output of data in the formed selected with user's manipulation in the video/audio information retrieving apparatus 31 can also be considered.

Moreover, an embodiment can also be considered, in which the video/audio information retrieving apparatus 31 confirms, for the digital broadcast receiver 30, the multimedia information format to be supported via the digital interface 14 and automatically converts and outputs the data based on the format thereof.

Based on the embodiments explained above, the video/audio information retrieving function can be used in the digital broadcast receiver 30 corresponding to various multimedia information formats.

While the present specification has shown and described several embodiments in accordance with the present invention, it should be understood that disclosed embodiments are susceptible of changes and modifications without departing from the scope of the invention. Therefore, the present invention does not intend to be bound by the details and described herein but intend to cover all such changes and modifications a fall within the ambit of the appended claims.

## Claims

1. A video/audio information retrieving apparatus, comprising:
storage means for storing the video/audio information inputted from each medium, attribute information indicating the attributes of said video/audio information and retrieving process program for retrieving said video/audio information;
setting means for setting the index information based on the attribute information stored in said storage means;
converting means for converting the index information and said retrieving process program set with said setting means to the multimedia information format; and
output means for outputting the index information and retrieving process program converted with said converting means to the external circuit together with said video/audio information.

2. A video/audio information retrieving apparatus according to claim 1, wherein said each medium is the broadcast medium or storage medium.

3. A video/audio information retrieving apparatus according to claim 1, wherein said index information is a title of the program to which said video/audio information belong, channel, broadcast time or genre information and class of medium information for discriminating a class of medium to which the program including said video/audio information.

4. A video/audio information retrieving apparatus according to claim 1, wherein said index information and retrieving process program are divided into packets and said packets group is multiplexed and outputted.

5. A video/audio information retrieving apparatus according to claim 1, wherein said index information and retrieving process program are multiplexed as one of the structural element of the channel for transmitting said video/audio information and is then outputted to the external circuit.

6. A video/audio information retrieving apparatus according to claim 1, wherein said index information and retrieving process program are multiplexed as the structural element of the other channel different from the channel for transmitting said video/audio information and are then outputted to the external circuit.

7. A video/audio information retrieving apparatus according to claim 1, wherein a designating means for designating said multimedia information format is provided and said converting means executes conversion based on the format designated with said designating means.

8. A video/audio information retrieving apparatus according to claim 1, wherein said multimedia information format is a processing language of BML, HTML, ECMA or JAVA.

9. A video/audio information retrieving apparatus according to claim 1, wherein said video/audio information, attribute information and multimedia information are inputted from a receiving means for receiving, demodulating and demultiplexing the transmitting signal in which these information pieces are multiplexed and modulated.

10. A video/audio information retrieving apparatus according to claim 1, wherein said video/audio information, attribute information and multimedia information are reproduced and inputted with a storage/reproducing means in which such information pieces are stored.

11. A display apparatus, comprising:
input means for inputting the video/audio information, index information of the multimedia information format based on the and attribute information indicating the attributes of the video/audio information and the retrieving process program of the multimedia information format for retrieving said video/audio information;
retrieving means for executing the retrieving process based on said retrieving process program using said index information; and
display means for displaying the video/audio information retrieved with said retrieving means.

12. A display apparatus according to claim 11, wherein a notifying means for notifying the video/audio information retrieved with said retrieving means to the external circuit together with the index information of said video/audio information is further provided said video/audio information is inputted to said input means based on said index information.

13. A display apparatus according to claim 11, wherein said display means displays a list of said index information pieces.

14. A display apparatus according to claim 11, wherein index information is a title of the program to which said video/audio information belong, channel, broadcast time or genre information and class of medium information for discriminating a class of medium to which the program including said video/audio information.

15. A retrieving system comprising:
a video/audio information retrieving apparatus having a storage means for storing the video/audio information inputted from each medium, attribute information indicating the attributes of said video/audio information and retrieving process program for retrieving said video/audio information, a setting means for setting the index information based on the attribute information stored in said storage means , a converting means for converting the index information and said retrieving process program set with said setting means to the multimedia information format and an output means for outputting the index information and retrieving process program converted with said converting means to the external circuit together with said video/audio information; and
a display apparatus having an input means for inputting the video/audio information, an index information and the retrieving process, a retrieving means for executing the retrieving process based on said retrieving process program using said index information and a display means for displaying the video/audio information retrieved with said retrieving means.
